# EUROPÄISCHE PATENTSCHRIFT

(11) **EP 1 156 538 B1**
(45) Veröffentlichungstag und Bekanntmachung des Hinweises auf die Patenterteilung: **27.06.2007**
(21) Anmeldenummer: 01111511.0
(22) Anmeldetag: 11.05.2001
(51) Int. Cl.: H01M 2/12

(54) **Stopfenanordnung**
Plug assembly
Montage de bouchon

(30) Priorität: 15.05.2000 DE 10023747
(43) Veröffentlichungstag der Anmeldung: 21.11.2001
(73) Patentinhaber: VB Autobatterie GmbH & Co. KGaA, 30419 Hannover (DE)
(72) Erfinder: Cramer, Wilhelm, 59929 Brilon-Messinghausen (DE)
(74) Vertreter: Gramm, Werner

(56) Entgegenhaltungen:
- EP-A- 0 584 528
- EP-A- 0 756 338
- EP-A- 0 920 063
- US-A- 4 052 534
- US-A- 6 051 332

## Beschreibung

Die Erfindung betrifft eine Stopfenanordnung zum gasdichten Verschließen einer Zellenöffnung eines Akkumulators, gebildet aus einem in die Zellenöffnung abdichtend einsetzbaren Verschlußstopfen.

Akkumulatoren sind aus dem Stand der Technik an sich bekannt. Sie bestehen aus unterschiedlichen Elektroden, die, sofern der Akkumulator mehrzellig ausgeführt ist, zu einzelnen Zellen zusammengefaßt und in einem Gehäuse angeordnet sind. Das Gehäuse ist oberseitig mit einem Deckel verschlossen. Der Gehäusedeckel besteht hierbei zumeist aus einem Ober- und einem Unterdeckel, wobei zwischen Ober- und Unterdeckel ein Hohlraum zur Säureabscheidung ausgebildet ist. Vorbeschrieben ist ein Akkumulator dieser Art beispielsweise in der EP 0 584 528 B1.

Die Elektroden bestehen bei den in der Regel für Kraftfahrzeuge verwendeten Bleiakkumulatoren aus Blei und sind gitterförmig ausgestaltet, wobei die Maschen des Gitters auf der positiven Seite mit Bleioxyd und auf der negativen Seite mit sogenanntem Bleischwamm gefüllt sind. Als Elektrolyt wird in der Regel Schwefelsäure verwendet, die entweder in flüssiger oder nach Art eines Gels in eingedickter Form verwendet werden kann. Bei Ladevorgängen kommt es zu chemischen Reaktionen im Elektrolyten, die unter anderem auch zu einer Gasentwicklung führen. Um einem unkontrollierten Druckaufbau innerhalb des Akkumulatorgehäuses und im schlimmsten Fall einer explosionsartigen Gasentspannung entgegen zu wirken, weist der Akkumulator zur Entgasung Gasauslaßöffnungen auf. Diese sind zumeist im Bereich des Deckels ausgebildet.

Zum Abführen der beispielsweise bei einer Elektrolytverdunstung in Folge von Aufladung entstehenden, leicht entzündlichen Gase sind aus dem Stand der Technik zwei grundlegende Entgasungsmöglichkeiten bekannt. Zum einen kann die Gasableitung derart erfolgen, daß die Gase direkt über die die einzelnen Zellenöffnungen verschließenden Stopfen an die den Akkumulator umgebende Atmosphäre abgegeben werden. Bekannt ist eine solche Gasableitung beispielsweise aus der EP 0 756 338. Zum anderen kann die Gasableitung über eine zentrale Entgasungsleitung erfolgen. Bei dieser Entgasungsvariante sind die einzelnen Zellen des Akkumulators über eine gemeinsame, zumeist im Batteriedeckel integrierte und quer zu den Zellen verlaufende Entgasungsleitung miteinander verbunden. Abzuleitende Gase werden über die Entgasungsleitung zumeist stirnseitig des Gehäusedeckels aus dem Akkumulatordeckel ausgeführt und an die Atmosphäre abgegeben. Vorbekannt ist die zuletzt genannte Entgasungsvariante unter anderem aus der EP 0 305 822 A1 und der US 5,561,001. Bei beiden vorgenannten Entgasungsvarianten werden die abzuleitenden Gase vor dem Austritt aus dem Akkumulator durch eine poröse Filterscheibe, die sogenannte Fritte, geleitet. Dies dient insbesondere der Vermeidung von Rückzündungen der leicht entzündlichen Gase zurück ins Akkumulatoreninnere.

Bei einer unsachgemäßen Handhabung des Akkumulators oder wenn dieser infolge eines notwendigerweise erforderlichen Montageschritts aus der Normallage herausbewegt und verdreht bzw. gekippt wird, tritt Säure aus den Akkumulatorzellen aus und läuft in den im Gehäusedeckel ausgebildeten Hohlraum. Dies ist selbstverständlich unerwünscht, zumal bei entsprechend hohem Innendruck ausgetretene Säure durch die Entgasungsöffnung hindurch aus dem Akkumulatorgehäuse heraus nach außen gedrückt wird. Dieser Umstand ist insbesondere dann von Nachteil, wenn als Starterbatterien für Kraftfahrzeuge zu verwendende Akkumulatoren nach einer Endmontage für den Einbau in das Kraftfahrzeug durch Drehen oder Kippen aus der Normallage heraus zu bewegen sind und infolge dieses Umstands Säure aus den Akkumulatorzellen austritt.

EP 0 920 063 A1 offenbart ein Stopfensystem zum Erschließen von Zellenöffnungen eines Akkumulators mit einem zentral in den Ventilstopfen eingesetztem Ventilelement. Das Ventilelement verschließe im Normalfall die Strömungstechnische Verbindung zwischen einem von einem reduzierten Abstand des Stopfenkörpers und dem Gehäusedeckel gebildeten Volumenraum und dem Zelleninneren. Bei einem Gasüberdruck im Zelleninneren öffnet das Ventilelement hingegen und lässt Gas aus dem Zelleninnem in die Atmosphäre über einen Entgasungskanal ausströmen.

US-Patent 4,052,534 offenbart einen Verschlussstopfen für eine Autobatterie mit einem im Verschlussstopfen selbst angeordneten Hohlraum zur Ableitung von Gas aus dem Zelleninneren in die Atmosphäre. Die Zweiwege-Membran ist lediglich gasdurchlässig und hat Schlitze zur Verminderung der Beanspruchung der Membran beim Öffnen und Schließen. Ein Rückfluss von kondensiertem Gasdampf in das Zelleninnere ist nicht möglich.

US-Patent 6,051,332 offenbart einen Ventilstopfen für einen Bleiakkumulator mit einem zentralen ringförmigen Ventil und einer Membran, die horizontal unterhalb des Verschlussstopfens angeordnet ist. Ein Flüssigkeitsrückfluss in das Zelleninnere ist bei der Anordnung nicht möglich.

Der Erfindung liegt daher unter Vermeidung der oben genannten Nachteile die **Aufgabe** zugrunde, eine Stopfenanordnung mit Zweiwegedichtmembran anzugeben, die eine ausreichende Entgasung ermöglicht und zugleich ein Auslaufen von Säure auch bei einem Kippen oder Drehen des Akkumulators weitestgehend verhindert. Ferner soll die Stopfenanordnung wirtschaftlich herstellbar, leicht montierbar und an unterschiedliche Akkumulatorenbauformen anpassbar sein.

Zur **Lösung** dieser Aufgabe wird mit der Erfindung eine Stopfenanordnung zum gasdichten Verschließen einer Zellenöffnung eines Akkumulators vorgeschlagen die aus einem in die Zellenöffnung abdichtend einsetzbaren Verschlussstopfen mit Zweiwegedichtmembran gebildet ist, wobei das Zelleninnere zur Säureabscheidung über eine mit der Zweiwegedichtmembran versehene Öffnung in der Mantelfläche des Verschlussstopfens strömungstechnisch mit einem zwischen Ober- und Unterdeckel des Gehäusedeckels ausgebildeten Hohlraum in Verbindung steht.

Ein mit der erfindungsgemäßen Stopfenanordnung versehener Akkumulator ist hinsichtlich des Auslaufens von Säure gegenüber Verdreh- bzw. Kippbewegungen weitestgehend unempfindlich. Die mit einer Dichtmembran versehene Öffnung in der Mantelfläche des Verschlussstopfens ermöglicht zwar die Entgasung der Akkumulatorzellen, doch verhindert sie wirkungsvoll, dass ungewollt Säure bei einer unsachgemäßen Handhabung oder infolge einer montagebedingten Schräglage aus dem Zelleninneren austritt und in den im Gehäusedeckel ausgebildeten Hohlraum läuft. Die Zweiwegedichtmembran ermöglicht überdies den langsamen Rückfluss von Säure für den Fall, dass aufgrund eines überhöhten Innendrucks, beispielsweise bei Überladung, während des Entgasungsvorgangs Säure aus der Zeile hinaus in den Hohlraum des Gehäusedeckels gelangt. Die sich dann im Hohlraum sammelnde Säure kann, die Dichtmembran in umgekehrter Richtung passierend, über die in der Mantelfläche des Verschlussstopfens ausgebildete Öffnung zurück in das Zelleninnere fließen.

Mit der erfindungsgemäßen Ausgestaltung wird in vorteilhafter Weise sichergestellt, dass Säure selbst dann nicht ungewollt aus dem Akkumulator herausläuft, wenn dieser aus seiner Normallage heraus gekippt oder gedreht wird. Insbesondere ist dies für den Einbau von als Starterbatterien für Kraftfahrzeuge dienenden Akkumulatoren von Vorteil. So können unter Verwendung vollautomatischer Montageanlagen die jeweiligen Akkumulatoren in die Kraftfahrzeuge eingebaut werden, ohne daß hierbei ein Verdrehen oder Verkippen der Akkumulatoren verhindert werden müßte. Vielmehr ist es ungeachtet der Tatsache, unter welchem Verdreh- oder Verkippwinkel die Akkumulatoren für einen positionsgenauen Einbau zu verfahren sind, sichergestellt, daß Säure aus dem Akkumulator nicht ausfließt.

Gemäß einem Merkmal der Erfindung ist die Dichtmembran an wenigstens einer Stelle unter Bildung einer Durchlaßöffnung mit einem Durchbruch versehen. Somit wird in vorteilhafter Weise einerseits gewährleistet, daß Gas während eines Entgasungsvorganges ungehindert aus dem Zelleninneren austreten kann, daß andererseits aber auch im Hohlraum des Gehäusedeckels befindliche Säure wieder in das Zelleninnere zurück gelangen kann. Somit wird sowohl im Hohlraum abgeschiedene Säure als auch infolge eines Verdrehens oder Verkippens des Akkumulators ungewollt in den Hohlraum eingedrungene Säure zurück in das Zelleninnere geleitet. Als insbesondere vorteilhaft hat sich dabei die spaltartige Ausbildung des Durchbruchs herausgestellt.

Gemäß einem alternativen Vorschlag ist die Dichtmembran aus zwei jeweils einseitig festgelegten flexiblen Teilmembranen gebildet. Auch diese Art der Ausbildung ermöglicht in vorteilhafter Weise sowohl den Gasaustritt als auch die Wiederrückführung von im Hohlraum angesammelter Säure. Hierbei sind gemäß einem weiteren Merkmal der Erfindung die Teilmembrane in Richtung auf den Hohlraum verschwenkbar angeordnet. Diese Anordnung unterstützt in vorteilhafter Weise die in Richtung auf den Hohlraum wirkende Entgasung. Die aufgrund der zweiteiligen Anordnung der Teilmembranen ausgebildeten Spalten ermöglichen auch bei dieser Ausführungsalternativen den langsamen Rückfluß der im Hohlraum angesammelten Säure. Infolge der flexiblen Ausbildung der Teilmembranen wird zudem in vorteilhafter Weise ein Zusetzen der durch die Dichtmembran verschlossenen Öffnung durch Partikel, die sich in der Zelle lösen können, verhindert, so daß unter allen Betriebszuständen eine sichere Entgasung des Akkumulators möglich ist.

Gemäß einem weiteren Merkmal der Erfindung ist die in der Mantelfläche des Verschlußstopfens ausgebildete Öffnung bei einem in die Zellenöffnung eingesetzten Verschlußstopfen dem Hohlraumzugang gegenüberliegend angeordnet. Mit dieser erfindungsgemäßen Maßnahme wird sichergestellt, daß bei einem betriebsbereiten Akkumulator die in den Verschlußstopfen ausgebildeten Öffnungen stets dergestalt positioniert sind, daß einerseits eine ungehinderte Entgasung und andererseits eine mögliche Säurerückführung stattfinden kann. Gemäß einem besonderen Vorteil der Erfindung ist die Unterkante der in der Mantelfläche des Verschlußstopfens ausgebildete Öffnung unterhalb der Unterkante der Hohraumzugangsöffnung angeordnet. Hierdurch wird erreicht, daß sich sowohl die in den Hohlraum hineingeströmte Säure als auch das im Hohlraum ausgebildete Kondensat direkt vor der schleusenartigen Dichtmembran ansammelt und nach und nach in das Zelleninnere zurückfließt. Rückstände im Hohlraum werden mithin vermieden.

Gemäß einem weiteren Merkmal der Erfindung weist der Verschlußstopfen kopfseitig eine umlaufende Dichtung auf, die bei einem in die Zellenöffnung eingesetzten Verschlußstopfen im Bereich des Oberdeckels dichtend an der die Zellenöffnung umgebenden Wandung anliegt und den Hohlraum gegenüber der den Akkumulator umgebenden Atmosphäre abdichtet. Ein unkontrolliertes Ausströmen von im Hohlraum befindlichen Gasen oder Flüssigkeiten in die den Akkumulator umgebende Atmosphäre wird hierdurch verhindert. Auch wird in umgekehrter Strömungsrichtung ein Eindringen von Fluiden in das Akkumulatorinnere unterbunden. Gemäß einem besonderen Vorteil der Erfindung ist die umlaufende Dichtung eine Runddichtung, vorzugsweise ein O-Ring.

Gemäß einem weiteren Merkmal der Erfindung weist der Verschlußstopfen fußseitig gleichfalls eine umlaufende Dichtung auf, die bei einem in die Zellenöffnung eingesetzten Verschlußstopfen im Bereich des Unterdeckels dichtend an der die Zellenöffnung umgebenden Wandung anliegt und den Hohlraum gegenüber dem Zelleninneren abdichtet. Hierbei ist die umlaufende Dichtung vorzugsweise als Lamellendichtung ausgebildet. Der Vorteil einer Lamellendichtung liegt dabei insbesondere darin, daß Toleranzen zwischen den Zellenöffnungen von Unter- und Oberdeckel ausgeglichen werden können, so daß beim Zusammenfügen von Unter- und Oberdeckel ein Toleranzausgleich bei Mittenlageversatz ermöglicht ist. Mit der Abdichtung des Zelleninneren gegenüber dem Hohlraum wird ein unkontrolliertes Einströmen des Elektrolyten aus dem Zelleninneren heraus in den Hohlraum hinein verhindert. Als Folge der sowohl fußals auch kopfseitigen Abdichtung des Verschlußstopfens kann mithin sichergestellt werden, daß eine Entgasung nur über die hierfür vorgesehene Öffnung in der Mantelfläche des Verschlußstopfens erfolgt. Erfindungsgemäß stellt die Zweiwegedichtmembran zudem sicher, daß neben einer Entgasung des Zelleninneren auch eine Rückführung von Kondensat und/oder in den Hohlraum hineingelaufener Säure möglich ist.

Gemäß einem weiteren Merkmal der Erfindung ist sowohl die Runddichtung als auch die Lamellendichtung jeweils einstückig am Verschlußstopfen angeformt. Eine einfache und vor allem wirtschaftliche Herstellung des Verschlußstopfens wird hierdurch ermöglicht. Dabei ist gemäß einem besonders vorteilhaften Vorschlag der Erfindung die Dichtmembran gleichfalls einstückig am Verschlußstopfen angeformt, wobei die Rund- und Lamellendichtung sowie die Dichtmembran im Zweikomponenten-Verfahren mittels Spritzgießen in einem einzigen verfahrensschritt ausgebildet werden. Ein in vorgenannter Weise hergestellter Verschlußstopfen kann durch leichte Modifikationen in Form und Größe variiert werden, so daß nach dem Baukastenprinzip unterschiedliche Verschlußstopfen zur Anpassung an unterschiedliche Akkumulatorbauformen herstellbar sind. Darüber hinaus sind die mit einstückig angeformten Dichtelementen versehenen Verschlußstopfen leicht zu montieren.

Weitere Merkmale und Vorteile der Erfindung ergeben sich aus der folgenden Beschreibung der zugehörigen Zeichnung. Dabei zeigen:
- Fig. 1: eine geschnittene Teilseitenansicht der erfindungsgemäßen Stopfenanordnung;
- Fig. 2: einen Teilausschnitt gemäß Fig. 1;
- Fig. 3: eine geschnittene Seitenansicht des erfindungsgemäßen Verschlußstopfens;
- Fig. 4: eine geschnittene Ansicht gemäß der Schnittlinie IV-IV nach Fig. 3;
- Fig. 5: einen Teilausschnitt gemäß Fig. 4;
- Fig. 6: eine Seitenansicht des erfindungsgemäßen Verschlußstopfens.

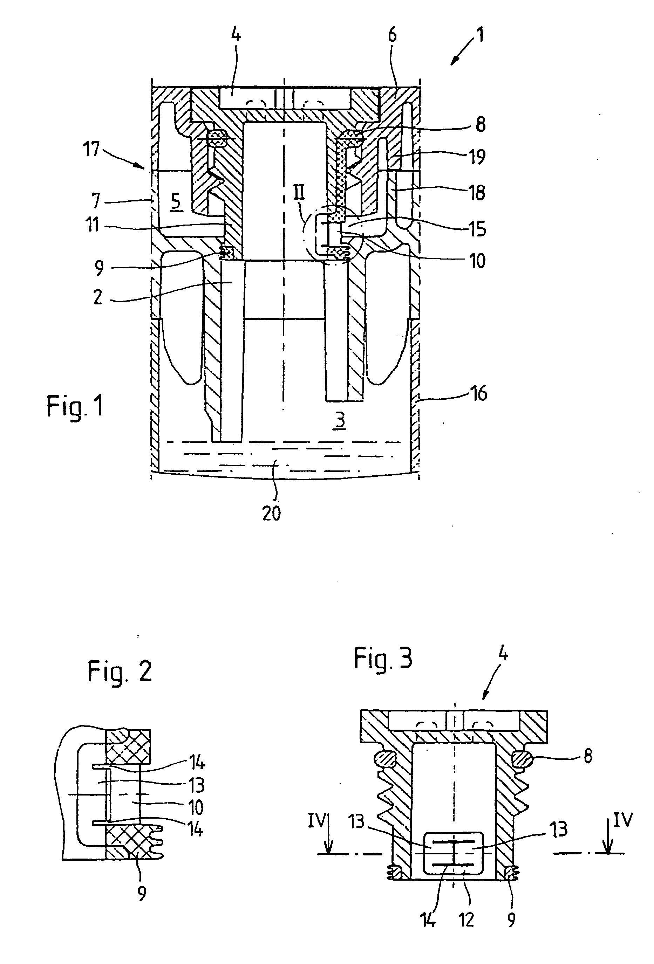

Die Fig. 1 zeigt in geschnittener Teilseitenansicht die erfindungsgemäße Stopfenanordnung 1. Das nach oben offene Gehäuse 16 ist durch einen Deckel 17 verschlossen. Der Deckel 17 besteht seinerseits aus einem Unterdeckel 7 sowie einem damit korrespondierenden Oberdeckel 6. Hierbei ist in der Fig. 1 lediglich der Bereich über einer der Zellen 3 angedeutet. Der Unterdeckel 7 weist nach oben gerichtete Stege 18 auf. Der Oberdeckel 6 ist hierzu korrespondierend ausgebildet und weist nach unten gerichtete Stege 19 auf, welche mit den Stegen 18 des Unterdeckels 7 fest verbunden sind. Dies kann beispielsweise durch Verkleben erreicht werden. Die Stege 18 und 19 definieren im Hohlraum 5 des Deckels 17 unter Ausbildung einer Entgasungsleitung eine Labyrintverzweigung.

Der Deckel 17 verfügt über eine Zellenöffnung 2. Die Zellenöffnung 2 ist mit einem Verschlußstopfen 4 verschlossen. Zu diesem Zweck ist die Zellenöffnung 2 mit einem Innengewinde und der Verschlußstopfen 4 mit einem dazu korrespondierenden Außengewinde versehen.

Zur Abdichtung des Verschlußstopfens 4 gegenüber dem Oberdeckel 6 ist eine Runddichtung 8 vorgesehen, die bei eingeschraubtem Verschlußstopfen abdichtend am Oberdeckel 6 anliegt. Durch die Runddichtung 8, die vorzugsweise als O-Ring ausgeführt ist, ist der Hohlraum 5 gegenüber der den Akkumulator umgebenden Atmosphäre abgedichtet. Fußseitig weist der Verschlußstopfen 4 eine umlaufende Lamellendichtung 9 auf. Die Lamellendichtung 9 liegt im Bereich des Unterdeckels 7 dichtend an der die Zellenöffnung 2 umgebenden Wandung an und dichtet den Hohlraum 5 gegenüber dem Zelleninneren 3 ab.

Direkt oberhalb der Lamellendichtung 9 ist die Mantelfläche 11 des Verschlußstopfens 4 mit einer Öffnung 10 versehen. Diese Öffnung 10 liegt bei eingeschraubtem Verschlußstopfen 4 dem Hohlraumzugang 15 direkt gegenüber, wobei die Unterkante der Öffnung 10 etwas unterhalb der Unterkante des Hohlraumzuganges 15 angeordnet ist. Über die in der Mantelfläche 11 des Verschlußstopfens 4 ausgebildete Öffnung 10 steht das Zelleninnere 3 mit dem im Deckel 17 ausgebildeten Hohlraum 5 strömungstechnisch in Verbindung. Die Öffnung 10 ermöglicht mithin eine Entgasung der Zelle 3. Um zu vermeiden, daß bei einem Kippen oder Drehen des Akkumulators die Säure 20 unkontrolliert durch die Öffnung 10 hindurch in den Hohlraum 5 des Deckels 17 strömt, ist die Öffnung 10 mit einem Dichtmembran 12 verschlossen.

Die Dichtmembran 12 ist als Zweiwegedichtmembran ausgeführt. Zum einen wird die Entgasung der Zelle 3 sichergestellt, zum anderen kann der sich im Hohlraum 5 abscheidende Säurenebel durch die Öffnung 10 hindurch zurück in das Zelleninnere 3 gelangen. Auch für den Fall, daß Säure bei entsprechend hohem Innendruck aus dem Zelleninneren 3 heraus in den Hohlraum 5 gepreßt wird, ist ein Rückfluß möglich. Mithin kann durch die erfindungsgemäße Stopfenanordnung 1 sichergestellt werden, daß Säure aus dem Akkumulatorgehäuse selbst dann nicht herausläuft, wenn der Akkumulator aus seiner Normalstellung heraus verdreht oder verkippt wird.

Gemäß einer bevorzugten Ausführungsform ist die Dichtmembran 12 unter Ausbildung mehrerer Durchtrittsspalten 14 aus jeweils zwei einseitig festgelegten flexiblen Teilmembranen 13 gebildet. Die Teilmembranen 13 sind hierbei in Richtung auf den Hohlraum 5 verschwenkbar angeordnet. Hierdurch wird in vorteilhafter Weise eine Entgasung der Zelle 3 unterstützt, so daß sich der Säurenebel im Hohlraum 5 des Deckels 17 abscheiden kann, wobei die Spalten 14 ein Zurückströmen der im Hohlraum 5 befindlichen Säure zurück in das Zelleninnere 3 ermöglichen. Gleichwohl verhindert die Dichtmembran 12 ein Ausströmen der im Zelleninneren 3 befindlichen Säure 20 in den Hohlraum 5 hinein infolge eines Kippens des Akkumulators.

Fig. 2 zeigt in vergrößerter Darstellung den Ausschnitt II gemäß Fig. 1. Deutlich zu erkennen ist hier die Anordnung einer Teilmembran 13 unter Ausbildung von Durchflußspalten 14.

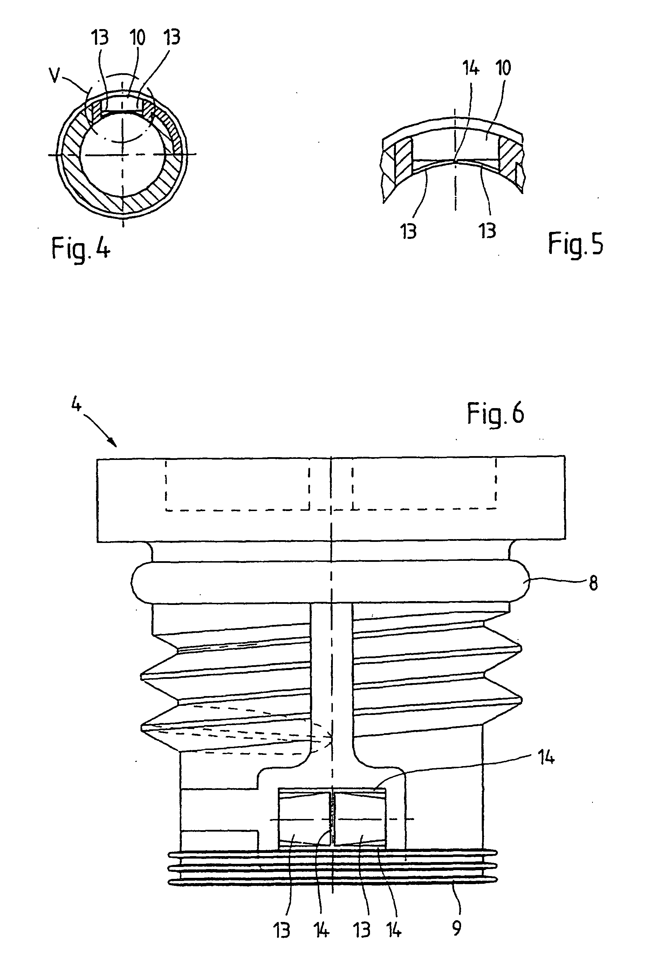

Fig. 3 zeigt in einer geschnitten Seitenansicht den erfindungsgemäßen Verschlußstopfen 14. Im Vergleich zu der Darstellung nach Fig. 1 ist der Verschlußstopfen 4 in Fig. 3 um 90° verdreht dargestellt. Deutlich zu erkennen in dieser Figur ist die aus zwei Teilmembranen 13 gebildete Dichtmembran 12. Die beiden Teilmembranen 13 sind in Form von Dichtarmen unter Ausbildung von Durchtrittsspalten 14 zu einander benachbart angeordnet. Die Teilmembrane 13 sind hierbei in Richtung auf den Hohlraum 5 verschwenkbar angeordnet. Dieser Zusammenhang ist insbesondere Fig. 4 bzw. der Ausschnittsvergrößerung gemäß Fig. 5 zu entnehmen.

Fig. 6 zeigt den erfindungsgemäßen Verschlußstopfen 4 in einer Seitenansicht. Runddichtung 8, Lamellendichtung 9 sowie die aus Teilmembranen 13 bestehende Dichtmembran 12 wird einstückig am Verschlußstopfen 4 angeformt und im Zweikomponenten-Verfahren mittels Spritzgießen hergestellt. Eine insbesondere wirtschaftliche Herstellung wird hierdurch erreicht. Zudem besteht die Möglichkeit, durch einfach durchzuführende Verfahrensvariationen den erfindungsgemäßen Verschlußstopfen 4 an unterschiedliche Akkumulatorenbauformen anzupassen.

### Bezugszeichenliste

- 1: Stopfenanordnung
- 2: Zellenöffnung
- 3: Zelle
- 4: Verschlußstopfen
- 5: Hohlraum
- 6: Oberdeckel
- 7: Unterdeckel
- 8: Runddichtung
- 9: Lamellendichtung
- 10: Öffnung
- 11: Mantelfläche
- 12: Dichtmembran
- 13: Teilmembran
- 14: Spalt
- 15: Hohlraumzugang
- 16: Gehäuse
- 17: Deckel
- 18: Steg
- 19: Steg
- 20: Säure

## Patentansprüche

1. Stopfenanordnung zum gasdichten Verschließen einer Zellenöffnung (2) eines Akkumulators, gebildet aus einem in die Zellenöffnung (2) abdichtend einsetzbaren Verschlussstopfen (4) mit einer Zweiwegedichtmembran (12) ***dadurch gekennzeichnet, dass*** das Zelleninnere (3) zur Säureabscheidung über eine mit der Zweiwegedichtmembran (12) versehene Öffnung (10) in der Mantelfläche (11) des Verschlussstopfens (4) strömungstechnisch mit einem zwischen Ober- und Unterdeckel (6, 7) des Gehäusedeckels (17) ausgebildeten Hohlraum (5) in Verbindung steht.

2. Stopfenanordnung nach Anspruch 1, **dadurch gekennzeichnet, dass** die Dichtmembran (12) an wenigstens einer Steile unter Bildung einer Durchlassöffnung mit einem Durchbruch (14) versehen ist.

3. Stopfenanordnung nach den Ansprüchen 1 und 2, **dadurch gekennzeichnet, dass** der Durchbruch ein Spalt (14) ist.

4. Stopfenanordnung nach Anspruch 1, **dadurch gekennzeichnet, dass** die Dichtmembran (12) aus jeweils zwei einseitig festgelegten flexiblen Teilmembranen (13) gebildet ist.

5. Stopfenanordnung nach Anspruch 4, **dadurch gekennzeichnet, dass** die Teilmembranen (13) in Richtung auf den Hohlraum (5) verschwenkbar angeordnet sind.

6. Stopfenanordnung nach einem der vorhergehenden Ansprüche, **dadurch gekennzeichnet, dass** die in der Mantelfläche (11) des Verschlussstopfens (4) ausgebildete Öffnung (10) bei einem in die Zellenöffnung (2) eingesetzten Verschlussstopfen (4) dem Hohlraumzugang (15) gegenüberliegend angeordnet ist.

7. Stopfenanordnung nach einem der vorhergehenden Ansprüche, **dadurch gekennzeichnet, dass** der Verschlussstopfen (4) kopfseitig eine umlaufende Dichtung (8) aufweist, die bei einem in die Zellenöffnung (2) eingesetzten Verschlussstopfen (4) im Bereich des Oberdeckels (6) dichtend an die Zellenöffnung (2) umgebenden Wandung anliegt und den Hohlraum (5) gegenüber der den Akkumulator umgebenden Atmosphäre abdichtet.

8. Stopfenanordnung nach Anspruch 7, **dadurch gekennzeichnet, dass** die umlaufende Dichtung eine Runddichtung (8), vorzugsweise ein O-Ring ist.

9. Stopfenanordnung nach einem der vorhergehenden Ansprüche, **dadurch gekennzeichnet, dass** der Verschlussstopfen (4) fußseitig eine umlaufende Dichtung (9) aufweist, die bei einem in die Zellenöffnung (2) eingesetzten Verschlussstopfen (4) im Bereich des Unterdeckels (7) dichtend an der die Zellenöffnung (2) umgebenden Wandung anliegt und den Hohlraum (5) gegenüber dem Zelleninneren (3) abdichtet.

10. Stopfenanordnung nach Anspruch 9, **dadurch gekennzeichnet, dass** die umlaufende Dichtung eine Lamellendichtung (9) ist.

11. Stopfenanordnung nach Anspruch 10, **dadurch gekennzeichnet, dass** die Lamellendichtung (9) toleranzausgleichend ausgebildet ist.

12. Stopfenanordnung nach einem der vorhergehenden Ansprüche, **dadurch gekennzeichnet, dass** sowohl die Runddichtung (8) als auch die Lamellendichtung (9) jeweils einstückig am Verschlussstopfen (4) angeformt ist.

## Claims

1. A plug arrangement for closing a cell vent (2) of a storage battery in a gas-tight fashion, comprising a sealing plug (4) used in a sealing off manner into the cell vent (2), with a two-way sealing membrane (12), **characterized in that** the cell interior (3) communicates by fluid mechanics with an hollow space (5) formed between upper and lower covers (6, 7) of the housing cover (17) for acid precipitation via an opening (10) provided with the two-way sealing membrane (12) in the generating surface (11) of the sealing plug (4).

2. A plug arrangement according to claim 1, **characterized in that** the sealing membrane (12) has a break-through (14) on at least one place forming a passage.

3. A plug arrangement according to claims 1 and 2, **characterized in that** the break-through is a gap (14).

4. A plug arrangement according to claim 1, **characterized in that** the sealing membrane (12) is made up of two flexible partial membranes (13) set on one side.

5. A plug arrangement according to claim 4, **characterized in that** the partial membranes (13) are arranged so they can swivel in the direction of the hollow space (5).

6. A plug arrangement according to one of the preceding claims, **characterized in that** the opening (10) made in the generated surface (11) of the sealing plug (4) is arranged opposite an access (15) to a hollow space on the sealing plug (4) used in the cell vent (2).

7. A plug arrangement according to one of the preceding claims, **characterized in that** the sealing plug (4) comprises a circumferential seal (8), on the top, that, in the sealing plug (4) used in the cell vent (2) in an area of the upper cover (6) bears down on a wall surrounding the cell vent (2) to seal the cell vent (2) and seals the hollow space (5) opposite air surrounding the storage battery.

8. A plug arrangement according to claim 7, **characterized in that** the circumferential seal is a circular seal (8), preferably an O-ring.

9. A plug arrangement according to one of the preceding claims, **characterized in that** the sealing plug (4) comprises a circumferential seal on a foot (9), which bears down on a wall surrounding the cell vent (2) to seal the cell vent (2) in an area of the lower cover (7) on the sealing plug (4) used in the cell vent (2) and seals the hollow space (5) opposite the inside of the cells (3).

10. A plug arrangement according to claim 9, **characterized in that** the circumferential seal is a lamellar seal (9).

11. A plug arrangement according to claim 10, **characterized in that** the lamellar seal (9) is designed to equalize tolerances.

12. A plug arrangement according to one of the preceding claims, **characterized in that** both the circular seal (8) and the lamellar seal (9) each are formed integrally onto the sealing plug (4).

## Revendications

1. Dispositif de bouchon permettant la fermeture de façon étanche d'une ouverture de cellule (2) d'un accumulateur, constitué d'un bouchon de fermeture (4) comportant une membrane d'étanchéité (12) pouvant être appliqué de façon étanche dans l'ouverture de cellule (2),
**caractérisé en ce que**
l'intérieur de la cellule (3) est en liaison fluidique avec une cavité (5) formée entre le couvercle supérieur et le couvercle inférieur (6, 7) du couvercle du boîtier (17) pour le dépôt de l'acide, par une ouverture (10) formée dans la surface de revêtement (11) du bouchon de fermeture (4) et pourvue d'une membrane d'étanchéité à deux voies (12).

2. Dispositif de bouchon selon la revendication 1,
**caractérisé en ce que**
la membrane d'étanchéité (12) est pourvue d'une ouverture (14) à au moins un endroit pendant la formation d'une ouverture de passage.

3. Dispositif de bouchon selon les revendications 1 et 2,
**caractérisé en ce que**
l'ouverture est une fente (14).

4. Dispositif de bouchon selon la revendication 1,
**caractérisé en ce que**
la membrane d'étanchéité (12) est constituée de deux membranes partielles (13) flexibles respectivement fixées sur une face.

5. Dispositif de bouchon selon la revendication 4,
**caractérisé en ce que**
les membranes partielles (13) sont pivotantes en direction de la cavité (5).

6. Dispositif de bouchon selon l'une quelconque des revendications précédentes,
**caractérisé en ce que**
l'ouverture (10) formée dans la surface de revêtement (11) du bouchon de fermeture (4) est en face de l'entrée de la cavité (15) lorsqu'un bouchon de fermeture (4) est placé dans l'ouverture de cellule (2).

7. Dispositif de bouchon selon l'une quelconque des revendications précédentes,
**caractérisé en ce que**
le bouchon de fermeture (4) présente du côté du sommet un joint périphérique (8) qui s'applique au niveau du couvercle supérieur (6) de façon étanche contre la paroi entourant l'ouverture de cellule (2) lorsqu'un bouchon de fermeture (4) est placé dans l'ouverture de cellule (2), et qui rend la cavité (5) étanche par rapport à l'atmosphère entourant l'accumulateur.

8. Dispositif de bouchon selon la revendication 7,
**caractérisé en ce que**
le joint périphérique est un joint rond (8), de préférence un joint torique.

9. Dispositif de bouchon selon l'une quelconque des revendications précédentes,
**caractérisé en ce que**
le bouchon de fermeture (4) présente du côté de la base un joint périphérique (9) qui, placé au niveau du couvercle inférieur (7) de façon étanche contre la paroi entourant l'ouverture de cellule (2) lorsqu'un bouchon de fermeture (4) est appliqué de façon étanche dans l'ouverture de cellule (2), rend la cavité (5) étanche par rapport à l'intérieur de la cellule (3).

10. Dispositif de bouchon selon la revendication 9,
**caractérisé en ce que**
le joint périphérique est un joint à lamelles (9).

11. Dispositif de bouchon selon la revendication 10,
**caractérisé en ce que**
le joint à lamelles (9) est formé de manière à compenser les tolérances.

12. Dispositif de bouchon selon l'une quelconque des revendications précédentes,
**caractérisé en ce que**
le joint rond (8) aussi bien que le joint à lamelles (9) sont respectivement rapportés par moulage d'un seul tenant sur le bouchon de fermeture (4).
